(19) Europäisches Patentamt
European Patent Office
Office européen des brevets

(11) EP 1 426 751 A1

(12) **EUROPEAN PATENT APPLICATION**

(43) Date of publication:
**09.06.2004 Bulletin 2004/24**

(51) Int Cl.7: **G01M 15/00, F01N 11/00**

(21) Application number: **02026776.1**

(22) Date of filing: **02.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(71) Applicant: **Delphi Technologies, Inc.
Troy, MI 48007 (US)**

(72) Inventors:
• **Billig, Stefan G.
54453 Nittel (DE)**

• **Duhr, Joel
3369 Leudelange (LU)**
• **Breitbach, Hermann J.
3328 Crauthem (LU)**
• **Kubis, Rüdiger
54329 Konz (DE)**

(74) Representative: **Beissel, Jean et al
Office Ernest T. Freylinger S.A.,
234, route d'Arlon,
B.P. 48
8001 Strassen (LU)**

(54) **Exhaust gas sampling device**

(57)    An exhaust gas sampling device for an internal combustion engine comprises a sampling cell (12) and an measuring gas conduit (16) for connecting said sampling cell (12) to an exhaust gas line (10) of the internal combustion engine. According to the invention said sampling cell (12) is arranged in the measuring gas conduit (16) and the measuring gas conduit is connected between a sampling point (18) of the exhaust gas line and a point within the air intake and exhaust gas outlet system of the internal combustion engine, which is at a lower pressure than the sampling point of the exhaust gas line.

Fig. 1

EP 1 426 751 A1

Printed by Jouve, 75001 PARIS (FR)

## Description

### *Introduction*

The present invention generally relates to devices for analysing the exhaust gas composition of internal combustion engines, and more specifically to devices for the in-situ analysis of exhaust gas concentrations.

The introduction of emission-limiting legislation has forced vehicle manufacturers to reduce the emissions of internal combustion engines by developing intelligent engine control and advanced exhaust gas systems, including e.g. exhaust gas recirculation systems, exhaust gas cleaning devices such as catalysts, etc.. In order to control the efficiency of the current engine control parameters or of the exhaust gas cleaning system, it is necessary to determine the exhaust gas composition in order to detect the concentration of harmful substances as e.g. CO, $CO_2$, $NO_x$, HC, etc.

For this reason, various exhaust gas analysing devices have been proposed, which enable the on-board analysis of the exhaust gas composition. The German patent application DE-A-196 05 053 discloses a diagnosis device for continuous measurement of the exhaust emissions of an automobile engine. The measurement is effected via IR gas absorption in a number of parallel cells or vessels, which have the exhaust gas fed through them simultaneously. The exhaust gas is deviated from the exhaust gas pipe via a branch conduit and fed to the measuring vessels by means of a pump arranged in the branch conduit.

A similar device for the analysis of exhaust gases is disclosed in EP-A-0 909 941. The device is based on the principle of IR gas absorption and comprises an analysis cell, which is connected to the exhaust gas pipe via a branch conduit. A measuring gas pump is arranged among other gas processing devices into the branch conduit for sending the gas to be measured to the analysing device.

It will be clear for the one skilled in the art, that the use of the gas measuring pumps for transporting the exhaust gases into the respective measuring cell increases the number of movable parts in the exhaust gas system and accordingly leads to an increase of the overall costs of the exhaust gas conditioning system of the vehicle.

### *Object of the invention*

The object of the present invention is to provide a less complicated exhaust gas sampling device.

### *General description of the invention*

This object is achieved by an exhaust gas sampling device according to claim 1. The exhaust gas sampling device for an internal combustion engine comprises a sampling cell and an measuring gas conduit for connecting said sampling cell to an exhaust gas line of the internal combustion engine. According to the invention said sampling cell is arranged in the measuring gas conduit and the measuring gas conduit is connected between a sampling point of the exhaust gas line and a point within the air intake and exhaust gas outlet system of the internal combustion engine, which is at a lower pressure than the sampling point of the exhaust gas line.

The measuring gas conduit of the present invention is connected between the exhaust gas line and a point of the engine gas handling conduits, which is at a lower pressure than the sampling point. This pressure difference between the two ends of the measuring gas conduit results in the measuring gas being transported into the sampling cell by the natural pressure drop between the two ends of the measuring gas conduit. The use of a pump is no longer necessary thus reducing the number of sophisticated parts in the exhaust gas sampling device. It follows that the present invention provides for a very cost effective exhaust gas-sampling device. In addition to the reduced manufacture costs of the proposed device, the failure rate of the device is very low since no mechanical parts are used. In fact the only possible failure would result from a pollution of the pipe system.

It should be noted, that the exhaust gas sampling methods such as IR absorption measurements are based on principles of measurement, which are very sensitive to heat. Thus, high temperatures in the measuring gas result in bad signal-to-noise-ratios. Therefore it is important to reduce the temperature of the measuring gases as well as to increase the distance between the noise source and the sensing device. It follows that the sampling cell is preferably located at a certain distance from the exhaust gas pipe, such that the temperature of the exhaust gases significantly decreases during the transport towards the measuring cell. Accordingly the measuring gas conduit will be dimensioned to have a length, which is sufficient to allow for the appropriate cooling of the measuring gas.

In a preferred and very simple embodiment of the device, the measuring gas conduit is connected as a bypass line across a restrictor means, i.e. a section of increased flow resistance, of the exhaust gas line of said internal combustion engine. The increased flow resistance results in a higher gas pressure upstream of the restrictor means compared to the pressure prevailing downstream of the restrictor means. The resulting pressure drop can be used in order to suck the exhaust gases from the sampling point upstream of the section into the measuring gas conduit. After the gas has passed the sampling cell, the measuring gas is feed again into the exhaust gas line, the entry point being downstream of the section with increased flow resistance.

The restrictor means may comprise an independent component in the exhaust gas line. In a preferred embodiment however, the restrictor means comprises an existing exhaust gas-conditioning component. The restrictor means may e.g. comprise a catalytic converter and/or exhaust silencer or muffler. It will be clear, that if the measuring gas conduit bypasses the catalytic converter, e.g. if the measuring gases are deviated from the exhaust gas line upstream of the converter, the result of the analysis can not be used in order to verify the operation of the catalytic converter. In this case, the results of the exhaust gas analysis is rather used for controlling the impact of one or more engine control parameters, such as the rate of EGR, on the composition of the exhaust gases.

In order to verify the operation of the catalytic converter, the measuring gases have to be sampled downstream of the converter. This is the case in the embodiment, where the measuring gas conduit bypasses a muffler located downstream of the catalytic converter.

In an alternative embodiment of the invention, the measuring gas conduit is connected between a sampling point of the exhaust gas line and an air intake tube. Due to the vacuum prevailing in the air intake manifold, the pressure difference between the exhaust gas line and the air intake manifold is considerably higher than a pressure difference produced by a restrictor means in the exhaust line. It follows that in this embodiment, the amount of measuring gas, which is deviated from the exhausts line, is considerably higher than in the above-described embodiment.

Once the exhaust gas enters the measuring gas conduit, its temperature decreases very fast. In order to maintain a temperature which lies above the condensation temperature, the exhaust gas sampling device may comprise a device for the conditioning of the measuring gas temperature, said device being arranged in the measuring gas line upstream of the sampling cell. This device for conditioning the measuring gas temperature enables the gas temperature to be set to a value, which is best suited for the analysis to be performed.

As stated above, the length of the measuring gas conduit will preferably be dimensioned so that the sampling cell is located sufficiently far from the high temperature exhaust gas line. Regarding the section of the measuring gas conduit, it will be clear that, for a given pressure drop across the conduit, the gas velocity inside the conduit is higher if the section of the conduit is smaller. In order to provide for stable measuring conditions, the section of the conduit should accordingly be sufficiently high so that the gas velocity is well adapted for the measurements to be performed. On the other hand, the measurements in the sampling cell are usually very sensitive on pressure variations in the measuring gas. In a preferred embodiment of the invention, the section of the measuring gas conduit is therefore adapted so as to dampen for transient pressure variations. This restriction requires the conduit section to be as small as possible. A small conduit section provides the supplemental advantage, that the mass of exhaust gas going through the measuring gas conduit will be limited such that the emission out level is not negatively affect.

It should be noted that the principle of the present invention is not limited to a specific sampling method but is applicable to a number of different exhaust gas analysing devices. In fact, the sampling cell of the exhaust gas sampling device may comprise one of infrared absorption measuring cell or a chemical measuring cell or a flame ionisation detector or any combination thereof.

## Detailed description with respect to the figures

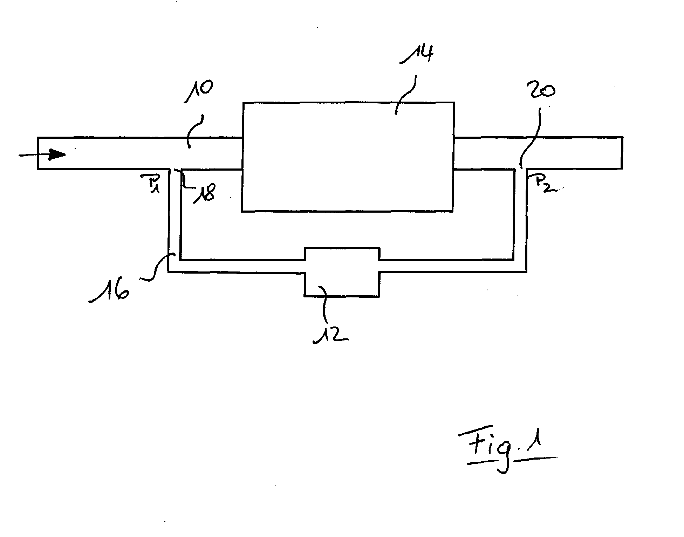

The present invention will be more apparent from the following description of a not limiting embodiment with reference to the attached figure 1, which schematically shows an arrangement of the exhaust gas sampling device in the exhaust system.

An exhaust gas sampling device for an internal combustion engine comprises a sampling cell 12 and an measuring gas conduit 16 for connecting said sampling cell 12 to an exhaust gas line 10 of the internal combustion engine. The sampling cell 12 is arranged in said measuring gas conduit 16. In the shown embodiment, the measuring gas conduit 16 is connected as a bypass line across a restrictor means, e.g. a catalytic converter 14 of the exhaust system. This means that the measuring gas conduit 16 is connected between a sampling point 18, which is located upstream of the converter 14, and a point 20 which is located downstream of the converter 14.

The present invention proposes to use natural pressure drops in the exhaust gas line 10 to transport the gases to the sampling cell 12 of a sensing device and back to the pipe 10, as seen on the attached drawing. The gas flow will arrive at the entrance of the converter 14 through the exhaust pipe 10. Since the converter 14 acts as a restrictor in the exhaust line 10 there will be a higher pressure P1 at its entrance than at its exit P2. This pressure drop across the converter 14 is used to transport the gases to through the sensing device 12. The pressure drop can be calculated as follows:

$$P1 - P2 = 0.5 * K_{Konv} * \rho_{gas} * v_{gas}^2$$

wherein P1, P2 represent the pressures upstream respectively downstream of the converter, $K_{Konv}$ a constant depending on geometric features of the converter, and $v_{gas}$ is the gas flow velocity.

## List of reference signs

10   exhaust gas line
12   sampling cell
14   catalytic converter
16   measuring gas conduit

18    sampling point
20    point located downstream of the converter 14

## Claims

1.  Exhaust gas sampling device for an internal combustion engine, comprising a sampling cell and an measuring gas conduit for connecting said sampling cell to an exhaust gas line of the internal combustion engine, **characterised in that** said sampling cell is arranged in said measuring gas conduit and that said measuring gas conduit is connected between a sampling point of the exhaust gas line and a point within the air intake and exhaust gas outlet system of the internal combustion engine, which is at a lower pressure than the sampling point of the exhaust gas line.

2.  Exhaust gas sampling device according to claim 1, wherein said measuring gas conduit is connected as a bypass line across a restrictor means of the exhaust gas line of said internal combustion engine.

3.  Exhaust gas sampling device according to claim 2, wherein said restrictor means comprises a catalytic converter.

4.  Exhaust gas sampling device according to claim 2, wherein said restrictor means comprises an exhaust silencer or muffler.

5.  Exhaust gas sampling device according to claim 1, wherein said measuring gas conduit is connected between a sampling point of the exhaust gas line and an air intake tube.

6.  Exhaust gas sampling device according to any one of the preceding claims, further comprising a device for the conditioning of the measuring gas temperature, said device being arranged in the measuring gas line upstream of the sampling cell.

7.  Exhaust gas sampling device according to any one of the preceding claims, wherein a section of the measuring gas conduit adapted so as to compensate for transient pressure variations.

8.  Exhaust gas sampling device according to any one of the preceding claims, wherein said sampling cell is an infrared absorption measuring cell and/or a chemical measuring cell and/or a flame ionisation detector.

10

14

20

18

P₁

16

12

P₂

Fig. 1

**European Patent Office**

## EUROPEAN SEARCH REPORT

Application Number

EP 02 02 6776

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 408 215 A (HAMBURG DOUGLAS R) 18 April 1995 (1995-04-18) * claims 1-9 * | 1 | G01M15/00 F01N11/00 |
| Y | US 6 477 458 B1 (YASUI YUJI ET AL) 5 November 2002 (2002-11-05) * column 10; figure 1 * | 1-8 | |
| Y | US 5 709 082 A (HARRIS STEPHEN JOEL ET AL) 20 January 1998 (1998-01-20) * column 3 - column 4 * | 1-8 | |
| A | EP 0 773 355 A (BAYERISCHE MOTOREN WERKE AG) 14 May 1997 (1997-05-14) * column 2 - column 3 * | 1-8 | |
| A | US 5 339 627 A (BAIER GUNAR) 23 August 1994 (1994-08-23) * column 3 * | 1-8 | |
| A | US 5 018 348 A (DUERSCHMIDT FERRY ET AL) 28 May 1991 (1991-05-28) * column 2 * | 1-8 | TECHNICAL FIELDS SEARCHED (Int.Cl.7) G01M F01N G01N |
| A | US 5 265 417 A (HAMBURG DOUGLAS R ET AL) 30 November 1993 (1993-11-30) * column 3 - column 4 * | 1 | |

The present search report has been drawn up for all claims

| Place of search | Date of completion of the search | Examiner |
|---|---|---|
| BERLIN | 5 May 2003 | Dietrich, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 02 6776

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2003

| Patent document cited in search report | | Publication date | Patent family member(s) | | Publication date |
|---|---|---|---|---|---|
| US 5408215 | A | 18-04-1995 | CA | 2077152 A1 | 05-03-1993 |
| US 6477458 | B1 | 05-11-2002 | JP | 2001140684 A | 22-05-2001 |
| | | | EP | 1099844 A2 | 16-05-2001 |
| US 5709082 | A | 20-01-1998 | NONE | | |
| EP 0773355 | A | 14-05-1997 | DE | 19541903 A1 | 15-05-1997 |
| | | | EP | 0773355 A1 | 14-05-1997 |
| US 5339627 | A | 23-08-1994 | DE | 4128997 A1 | 04-03-1993 |
| | | | DE | 59204899 D1 | 15-02-1996 |
| | | | EP | 0530655 A2 | 10-03-1993 |
| US 5018348 | A | 28-05-1991 | DE | 3841685 A1 | 13-06-1990 |
| | | | FR | 2640383 A1 | 15-06-1990 |
| | | | GB | 2225860 A ,B | 13-06-1990 |
| | | | IT | 1237223 B | 27-05-1993 |
| | | | JP | 2190756 A | 26-07-1990 |
| US 5265417 | A | 30-11-1993 | DE | 4342035 A1 | 14-07-1994 |
| | | | GB | 2274169 A | 13-07-1994 |
| | | | JP | 6235709 A | 23-08-1994 |